# EUROPEAN PATENT APPLICATION

(11) **EP 4 344 165 A1**
(43) Date of publication of application: **27.03.2024**
(21) Application number: 22804600.9
(22) Date of filing: 13.05.2022
(51) Int. Cl.: H04L 67/00, H04N 7/15, H04N 21/854

(54) **EDITING SYSTEM, TERMINAL DEVICE, AND EDITING PROGRAM**

(30) Priority: 20.05.2021 JP 2021085023
(71) Applicant: BROTHER KOGYO KABUSHIKI KAISHA, Nagoya-shi, Aichi 467-8561 (JP)
(72) Inventor: KOSAKA, Raizo, Nagoya-shi, Aichi 467-8562 (JP); KUDO, Yasuhiro, Nagoya-shi, Aichi 467-8562 (JP); KAWAGUCHI, Emi, Nagoya-shi, Aichi 467-8562 (JP)
(74) Representative: J A Kemp LLP
(86) International application number: PCT/JP2022/020178
(87) International publication number: WO 2022/244688

(57) **Abstract**

Provided are an editing system, a terminal, and an editing program capable of accepting an input operation and executing processing even while loading (uploading or downloading) of data is in progress. A terminal 3A transmits, to a terminal 3B, associated information indicating a position where a first content 4 is to be displayed and a size of the first content 4 to be displayed (S113a). The terminal 3B receives the associated information transmitted by the terminal 3A (S117b). The terminal 3B displays, based on the received associated information, associated images 41A, 42Abased on which the position and the size are identifiable (S119). The terminal 3B accepts an editing operation including at least one of a change operation or an input operation (S301). The change operation is of changing at least one of a position or a size of the associated images 41A, 42A. The input operation is of inputting a second content being different from the first content.

## Description

### TECHNICAL FIELD

The present invention relates to an editing system, a terminal, and an editing program.

### BACKGROUND

Patent literature 1 discloses a communication system including a plurality of electronic whiteboards, a communication management system, and an image storage device. The communication system enables sharing of a document image to be displayed on each of the electronic whiteboards among participants. In a case where image data and stroke data have respective different data volumes, a whiteboard may complete receiving the image data and receiving the stroke data at respective different timings. In the communication system, although such a case happens, the following processing is executed such that the participants can smoothly communicate with each other.

Prior to transmitting image data to the image storage device, a first electronic whiteboard transmits an upload start notification to a second electronic whiteboard via the communication management system. In response to receiving the upload start notification, the second electronic whiteboard displays an image visually indicating progress in downloading the image data, for example, an image indicating an hourglass. In response to the second electronic whiteboard receiving stroke data from the first electronic whiteboard via the communication management system before the first electronic whiteboard completes uploading the image data, the second electronic whiteboard displays a stroke image based on the stroke data. In response to the first electronic whiteboard completing uploading the image data, the communication management system transmits an upload completion notification to the second electronic whiteboard. In response to receiving the upload completion notification, the second electronic whiteboard downloads the image data from the image storage device and displays the image data in place of the image indicating the hourglass.

### Citation List

### Patent Literature

[Patent Literature 1]
JP2020-95705A

### SUMMARY

### Technical Problem

In the above-described communication system, for example, the second electronic whiteboard might not be allowed to accept an input operation of stroke data by a participant until the second electronic whiteboard completes downloading the image data. Even if the second electronic whiteboard is allowed to accept the input operation of the stroke data and display the stroke data thereon, the second electronic whiteboard might not be allowed to transmit the stroke data to the first electronic whiteboard. The stroke data thus cannot be displayed on the first electronic whiteboard.

An object of the present invention is to provide an editing system, a terminal, and an editing program that are capable of accepting an input operation and executing processing even while loading (uploading or downloading) of data is in progress.

### Solution to Problem

In a first aspect of the present invention, an editing system includes a first terminal and a second terminal communicable with each other. The first terminal includes a first accepting means for accepting a first content, and a first transmitting means for transmitting first associated information and the first content accepted by the first accepting means to the second terminal. The first associated information indicates a first position and a first size. The first position indicates a position where the first content is to be displayed on a first display unit of the first terminal. The first size indicates a size of the first content to be displayed on the first display unit of the first terminal. The second terminal includes a first receiving means for receiving the first content and the first associated information transmitted by the first terminal, a first displaying means for, based on the first associated information received by the first receiving means, displaying, on a second display unit of the second terminal, an associated image based on which the first position and the first size are identifiable, and a second accepting means for accepting an editing operation while the associated image is being displayed on the second display unit by the first displaying means. The editing operation includes at least one of a change operation or an input operation. The change operation is of changing at least one of a position or a size of the associated image. The input operation is of inputting a second content different from the first content.

In the first aspect, the second terminal can accept the editing operation regardless of whether the second terminal has completed receiving the first content. Thus, in the editing system, the content corresponding to the editing operation can be shared between the first terminal and the second terminal in a timely manner.

In a second aspect of the present invention, a terminal is communicable with a particular terminal, and includes a first accepting means for accepting a first content, a first transmitting means for transmitting first associated information and the first content accepted by the first accepting means to the particular terminal. The first associated information indicates a first position and a first size. The first position indicates a position where the first content is to be displayed on a display unit of the terminal. The first size indicates a size of the first content to be displayed on the display unit of the terminal. The terminal further includes a first displaying means for displaying the first content accepted by the first accepting means in the first size at the first position on the display unit of the terminal, and a second accepting means for accepting an editing operation including at least one of a change operation or an input operation. The change operation is of changing at least one of a position or a size of the first content displayed on the display unit by the first displaying means. The input operation is of inputting a second content different from the first content.

In the second aspect, the terminal can accept the editing operation regardless of whether the terminal has completed transmitting the first content. Thus, the terminal can share the content corresponding to the editing operation with the particular terminal in a timely manner.

In a third aspect of the present invention, a terminal is communicable with a particular terminal, and includes a first receiving means for receiving a first content and first associated information transmitted by the particular terminal. The first associated information indicates a first position and a first size. The first position indicates a position where the first content is to be displayed on a display unit of the terminal. The first size indicates a size of the first content to be displayed on the display unit of the terminal. The terminal further includes a first displaying means for, based on the first associated information received by the first receiving means, displaying, on the display unit of the terminal, an associated image based on which the first position and the first size are identifiable, and a second accepting means for accepting an editing operation while the associated image is being displayed on the display unit by the first displaying means. The editing operation includes at least one of a change operation or an input operation. The change operation is of changing at least one of a position or a size of the associated image. The input operation is of inputting a second content different from the first content.

In the third aspect, the terminal can accept the editing operation regardless of whether the terminal has completed receiving the first content. Thus, the terminal can share the content corresponding to the editing operation with the particular terminal in a timely manner.

In a fourth aspect of the present invention, an editing program causes a computer of a first terminal communicable with a second terminal to execute steps. The steps include a first accepting step including accepting a first content, and a transmitting step including transmitting first associated information and the first content accepted in the first accepting step to the second terminal. The first associated information indicates a first position and a first size. The first position indicates a position where the first content is to be displayed on a display unit of the first terminal. The first size indicates a size of the first content to be displayed on the display unit of the first terminal. The steps further include a displaying step including displaying the first content accepted in the first accepting step in the first size at the first position on the display unit of the first terminal, and a second accepting step including accepting an editing operation including at least one of a change operation or an input operation. The change operation is of changing at least one of a position or a size of the first content displayed on the first display unit in the displaying step. The input operation is of inputting a second content being different from the first content. According to the fourth aspect, the same effect as in the second aspect is achieved.

In a fifth aspect of the present invention, an editing program causes a computer of a first terminal communicable with a second terminal to execute steps. The steps include a receiving step including receiving a first content and first associated information transmitted by the second terminal. The first associated information indicates a first position and a first size. The first position indicates a position where the first content is to be displayed on a display unit of the first terminal. The first size indicates a size of the first content to be displayed on the display unit of the first terminal. The steps further include a displaying step including, based on the first associated information received in the receiving step, displaying, on the display unit of the first terminal, an associated image based on which the first position and the first size are identifiable, and an accepting step including accepting an editing operation while the associated image is being displayed on the display unit of the first terminal in the displaying step. The editing operation includes at least one of a change operation or an input operation. The change operation is of changing at least one of a position or a size of the associated image. The input operation is of inputting a second content being different from the first content. According to the fifth aspect, the same effect as in the third aspect is achieved.

### BRIEF DESCRIPTION OF THE DRAWINGS

FIG. 1 illustrates an overview of an editing system 1.
FIG. 2 is a diagram illustrating a basic communication sequence.
FIGS. 3A and 3B are diagrams illustrating a first communication sequence.
FIGS. 4A and 4B are diagrams illustrating a second communication sequence.
FIGS. 5A and 5B are diagrams illustrating a third communication sequence.
FIGS. 6A and 6B are diagrams illustrating a fourth communication sequence.

### DETAILED DESCRIPTION

An embodiment of the invention will be described with reference to the drawings. The drawings to be referred to are used for describing technical features that may be adopted by the present invention, and configurations of devices described herein are not intended to be limited thereto, but are merely illustrative examples.

### <Overview of Editing System 1>

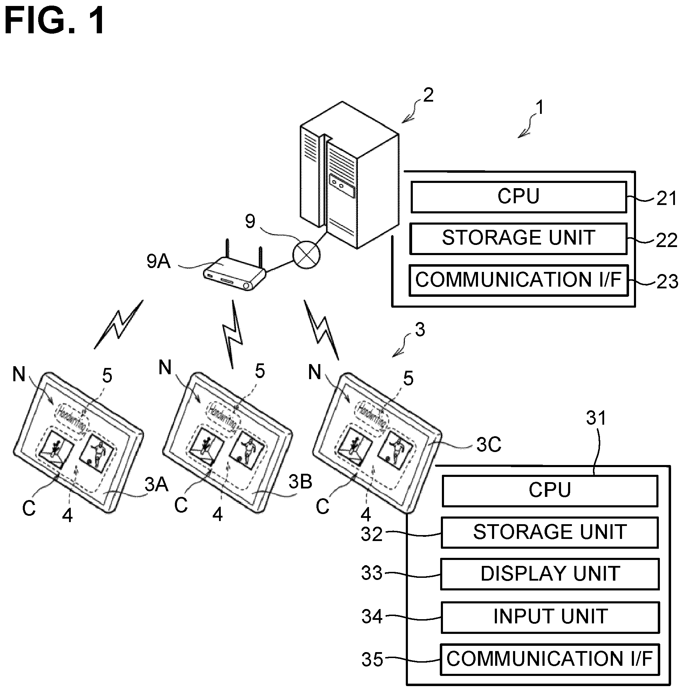

Referring to FIG. 1, an overview of an editing system 1 will be described. The editing system 1 includes a server 2 and terminals 3A, 3B, and 3C (hereinafter, collectively referred to as "terminals 3"). The server 2 is communicably connected to an access point 9A via a network line 9. Each of the terminals 3 is connected to the access point 9A so that each of the terminals 3 can communicate wirelessly with the access point 9A. Thus, the server 2 and each of the terminals 3 are communicable with each other via the network line 9 and the access point 9A. The terminals 3 are known tablet terminals.

The server 2 includes a CPU 21, a storage unit 22, and a communication interface (I/F) 23. The CPU 21 performs overall control of the server 2. The storage unit 22 is configured to store, for example, a server program to be executed by the CPU 21, and content C. The communication I/F 23 is a communication module for performing communication with the respective terminals 3 via the network line 9 and the access point 9A.

Specific examples of the content C include a first content 4 and a second content 5. The first content 4 includes a still image (hereinafter, referred to as a "picture"), a video, and audio. A file format for picture is, for example, JPEG, GIF, PNG, TIFF, or BMP. A file format for video is, for example, MP4, AVI, MPEG, or WMV. A file format for audio is, for example, WAVE, AIFF, MP3, or AAC. The second content 5 includes text and a line drawing. A file format for text is, for example, TXT or HTML. A line drawing includes, for example, coordinate data of a start point and an end point of each line segment. The first content 4 has a data volume greater than a data volume of the second content 5.

Each of the terminals 3 includes a CPU 31, a storage unit 32, a display unit 33, an input unit 34, and a communication I/F 35. The CPU 31 generally controls the terminal 3. The storage unit 32 is configured to store, for example, an editing program to be executed by the CPU 31, and the content C. The display unit 33 is a liquid crystal display. The input unit 34 is a touch screen disposed on a surface of the display unit 33. The communication I/F 35 is a communication module for performing communication with the server 2 via the network line 9 and the access point 9A.

In the editing system 1, in response to activation of a certain application in each of the terminals 3, a rectangular display area (hereinafter, referred to as a "notebook N") that has become shared among the terminals 3 is displayed on the entire screen of each display unit 33. For example, in a case where the notebooks N have been shared among the terminals 3A to 3C, in response to a first content 4 being imported to the notebook N in the terminal 3A or a second content 5 being entered to the notebook N in the terminal 3A, the first content 4 or the second content 5 appear to become viewable in the notebook N of each of the terminals 3A to 3C. In addition, for example, in response to the terminal 3A receiving an input of an operation of editing the content C through the input unit 34, the content C that has been displayed in the notebook N of each of the terminals 3B and 3C is updated to a post-edited state. Note that "editing of the content C" refers to, for example, moving, scaling, or both of the content C that has been inserted in the notebook N.

Note that the editing program may be stored in a recording medium readable by each of the terminals 3. Each of the terminals 3 may read the editing program stored in the recording medium and store the editing program in a corresponding storage unit 32. Alternatively, the editing program may be provided to each of the terminals 3 through downloading of the editing program from the server 2. Each of the terminals 3 may store the downloaded editing program in the corresponding storage unit 32.

### <Communication Sequence>

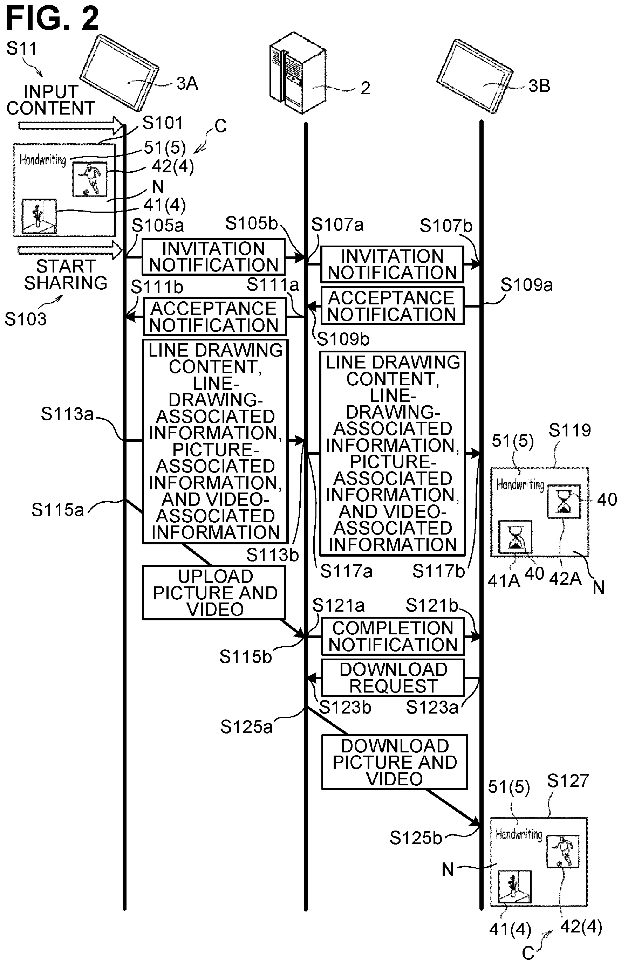

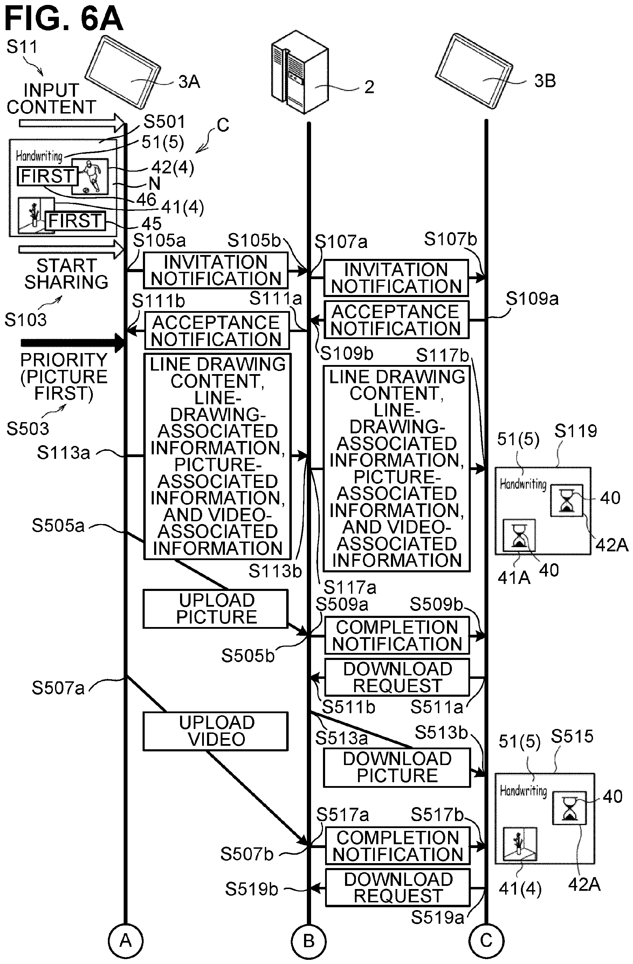

Referring to FIGS. 2 to 6B, a description will be provided on a communication sequence in the editing system 1. In FIGS. 2 to 6, only the terminals 3A and 3B of the terminals 3 are illustrated, and the terminal 3C is omitted. The CPU 21 of the server 2 executes the communication sequence by reading and executing the server program stored in the storage unit 22. The CPUs 31 of the terminals 3 execute the communication sequence by reading and executing the editing program from the respective storage units 32. Hereinafter, the phrase "the CPU 21 of the server 2 executes processing" will be referred to as "the server 2 executes processing". The phrase "the CPU 31 of any one of the terminals 3 executes processing" is referred to as "the terminal 3 executes processing".

### <Basic Communication Sequence>

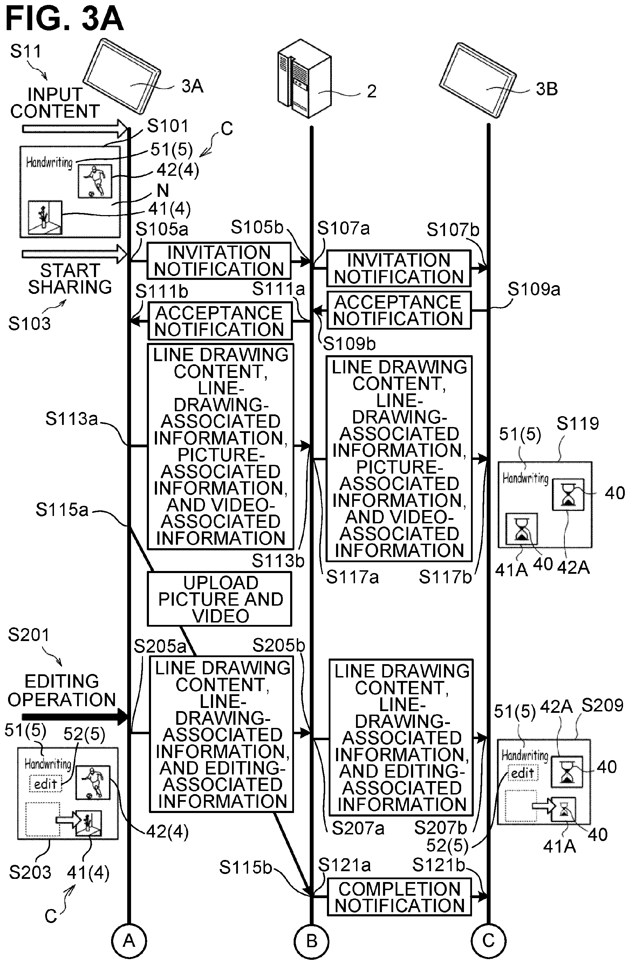

Referring to FIG. 2, a description will be provided on a basic communication sequence that is a basis of a first communication sequence to a fourth communication sequence (refer to FIGS. 3A to 6B) to be described later. The terminal 3A accepts, via the input unit 34, an input operation of importing a picture content 41 and a video content 42 as a first content 4 into the notebook N of the terminal 3A. Further, the terminal 3A accepts, via the input unit 34, an input operation of specifying positions of the imported picture content 41 and the imported video content 42, respectively, in the notebook N of the terminal 3A (S11).

The terminal 3A inserts and displays the imported picture content 41 and the imported video content 42 at the specified positions, respectively, in the notebook N of the terminal 3A (S101). The picture content 41 and the video content 42 inserted in the notebook N each have a rectangular shape.

The terminal 3A accepts, via the input unit 34, an input operation of inputting a line drawing content 51 as a second content 5 (S1 1). The input operation of inputting the line drawing content 51 includes specifying a specific position in the notebook N. The terminal 3A inserts and displays the line drawing content 51 at the specified position in the notebook N of the terminal 3A (S101). That is, the line drawing content 51 accepted in S11 is inserted into and displayed in the notebook N of the terminal 3A in S101.

The terminal 3A further accepts, via the input unit 34, an input operation of starting sharing of the notebooks N between the terminal 3A and the terminal 3B (S103). The terminal 3A transmits, to the server 2, an invitation notification for inviting the terminal 3B as the terminal 3 with which the notebooks N are shared (S105a). The server 2 receives the invitation notification (S105b). The server 2 transmits the received invitation notification to the terminal 3B (S107a). The terminal 3B receives the invitation notification (S107b).

The terminal 3B displays, on the display unit 33 of the terminal 3B, a selection screen that enables a user to select whether the sharing of the notebook N of the terminal 3A with the terminal 3B is allowed. In response to accepting, via the selection screen, an input operation of allowing sharing of the notebook N of the terminal 3A, the terminal 3B transmits an acceptance notification to the server 2 to accept the invitation (S109a). The server 2 receives the acceptance notification (S109b). The server 2 transmits the received acceptance notification to the terminal 3A (S111a). The terminal 3A receives the acceptance notification (S111b).

The terminal 3A performs the following processing for sharing the notebooks N between the terminal 3A and the terminal 3B. The terminal 3A identifies the line drawing content 51 accepted in S11 and the position and size of the line drawing content 51 in the notebook N of the terminal 3A. Note that the position of the second content 5 including the line drawing content 51 is indicated by X and Y coordinates of an upper left corner of a rectangle in which the second content 5 is inscribed, and the size of the second content 5 is indicated by a length in a left-right direction and a length in an up-down direction of the rectangle in which the second content 5 is inscribed. Further, the terminal 3A identifies the position and size of each of the picture content 41 and the video content 42 inserted in the notebook N of the terminal 3A. Note that the position of the first content 4 including the picture content 41 and the video content 42 is indicated by X and Y coordinates of an upper left corner of a rectangular border surrounding the first content 4, and the size of the first content 4 is indicated by a length in the left-right direction and a length in the up-down direction of the rectangular border surrounding the first content 4.

In the above description, an X-axis direction in the X and Y coordinates indicating the position corresponds to the left-right direction, and a Y-axis direction in the X and Y coordinates indicating the position corresponds to the up-down direction. A reference point (0,0) of the X and Y coordinates coincides with an upper left corner point of the display unit 33. An X-axis coordinate value is indicated by a proportion where an X coordinate of the upper right corner point of the display unit 33 is 1 (one). A Y-axis coordinate value is indicated by a proportion where a Y coordinate of a lower left corner point of the display unit 33 is 1 (one). The length in the left-right direction indicating the size is indicated by a proportion where a length of the display unit 33 in the left-right direction is 1 (one). The length in the up-down direction indicating the size is indicated by a proportion where a length of the display unit 33 in the up-down direction is 1 (one). That is, the position and the size are indicated by respective values standardized based on the size of the display unit 33.

Hereinafter, information indicating the position and size of each of the first content 4 and the second content 5 inserted in the notebook N is referred to as "associated information". The associated information about the picture content 41 is referred to as "picture-associated information". The associated information about the video content 42 is referred to as "video-associated information". The associated information about the line drawing content 51 is referred to as "line-drawing-associated information".

The terminal 3A transmits the line drawing content 51, the line-drawing-associated information, the picture-associated information, and the video-associated information to the server 2 (S1 13a). Then, the terminal 3A starts uploading the picture content 41 and the video content 42 by starting transmission of the picture content 41 and the video content 42 to the server 2 (S115a).

The server 2 receives the line drawing content 51, the line-drawing-associated information, the picture-associated information, and the video-associated information that have been transmitted from the terminal 3A (S1 13b). The server 2 transmits, to the terminal 3B, the line drawing content 51, the line-drawing-associated information, the picture-associated information, and the video-associated information that have been received from the terminal 3A (S117a). Further, the server 2 starts receiving the picture content 41 and the video content 42 that the terminal 3A has started uploading. The server 2 stores the received picture content 41 and video content 42 in the storage unit 22.

The terminal 3B receives the line drawing content 51, the line-drawing-associated information, the picture-associated information, and the video-associated information that have been transmitted from the server 2 (S117b). The terminal 3B inserts the line drawing content 51 into the notebook N of the terminal 3B based on the position and size indicated by the line-drawing-associated information, and displays the line drawing content 51 on the display unit 33 (S119). Note that the position of the upper left corner of the rectangle in which the line drawing content 51 is inscribed matches the position indicated by the line-drawing-associated information. Further, the lengths in the left-right direction and the up-down direction of the rectangle in which the line drawing content 51 is inscribed match the size indicated by the line-drawing-associated information. Thus, the line drawing content 51 is displayed, in the notebook N of the terminal 3B, in the same size at the same position as the line drawing content 51 inserted in the notebook N of the terminal 3A.

Further, the terminal 3B inserts an associated image 41A into the notebook N of the terminal 3B based on the position and size indicated by the picture-associated information, and displays the associated image 41A on the display unit 33 of the terminal 3B (S119). Likewise, the terminal 3B inserts an associated image 42A into the notebook N of the terminal 3B based on the position and size indicated by the video-associated information, and displays the associated image 42A on the display unit 33 of the terminal 3B (S119).

Each of the associated images 41A and 42A is indicated by a rectangular closed curve. A position of an upper left corner of the associated image 41A matches the position indicated by the picture-associated information. A length of the associated image 41A in the left-right direction and a length of the associated image 41A in the up-down direction match the size indicated by the picture-associated information. A position of an upper left corner of the associated image 42A matches the position indicated by the video-associated information. A length of the associated image 42A in the left-right direction and a length of the associated image 42A in the up-down direction match the size indicated by the video-associated information. Thus, the position and size of each of the picture content 41 and the video content 42 inserted in the notebook N of the terminal 3A can be identified based on each of the associated images 41A and 42A.

Further, the terminal 3B displays a progress indicator 40 indicated by an hourglass in each of the associated images 41A and 42A (S119). The progress indicator 40 indicates that the server 2 is in progress of receiving the picture content 41 and the video content 42 that the terminal 3A has started uploading.

In response to completing receiving the picture content 41 and the video content 42 that the terminal 3A has started uploading in S 115a (S115b), the server 2 transmits, to the terminal 3B, a completion notification for notifying the terminal 3B of the reception completion (S121a). The completion notification includes a type (the picture content 41 and the video content 42) of the content C whose reception has been completed. The terminal 3B receives the completion notification (S121b).

The terminal 3B that has received the completion notification obtains the type included in the completion notification and identifies the picture content 41 and the video content 42. In order to request of the server 2 that the terminal 3B download the picture content 41 and the video content 42 from the server 2, the terminal 3B transmits a download request to the server 2 (S123a). The download request includes the type of the content C requested to be downloaded. The server 2 receives the download request (S123b).

The server 2 obtains the type included in the download request and identifies the picture content 41 and the video content 42. The server 2 starts transmitting, to the terminal 3B, the picture content 41 and the video content 42 stored in the storage unit 22 (S125a). The terminal 3B starts downloading the picture content 41 and the video content 42 that the server 2 has started transmitting.

In response to completing downloading the picture content 41 and the video content 42 (S125b), the terminal 3B deletes the progress indicators 40 that have been displayed since S119 from the notebook N of the terminal 3B. The terminal 3B inserts and displays the received picture content 41 at the specified position in the notebook N of the terminal 3B in place of the associated image 41A that has been displayed since S119 (S127). The terminal 3B inserts and displays the received video content 42 at the specified position in the notebook N of the terminal 3B in place of the associated image 42A (S127). At this time, the terminal 3B adjusts the sizes of the picture content 41 and the video content 42 such that the picture content 41 and the video content 42 just fit within the associated images 41A and 42A, respectively.

A position of an upper left corner of the picture content 41 matches the position indicated by the picture-associated information received in S117b. A length of the picture content 41 in the left-right direction and a length of the picture content 41 in the up-down direction match the size indicated by the picture-associated information received in the S117b. Likewise, a position of an upper left corner of the video content 42 matches the position indicated by the video-associated information received in S117b. A length of the video content 42 in the left-right direction and a length of the video content 42 in the up-down direction match the size indicated by the video-associated information received in the S117b. That is, the positions and sizes of the picture content 41 and the video content 42 inserted in the notebook N of the terminal 3B match the positions and sizes of the picture content 41 and the video content 42 inserted in the notebook N of the terminal 3A, respectively. As described above, the notebook N is shared between the terminal 3A and the terminal 3B

### <Actions, Effects, and Special Notes of Basic Communication Sequence>

The terminal 3B inserts the associated images 41A and 42A at the specified positions, respectively, in the notebook N of the terminal 3B and displays the associated images 41A and 42A (S119) until the terminal 3B completes downloading the first content 4 (the picture content 41 and the video content 42) (S125b) after receiving the picture-associated information and the video-associated information (S117b). The terminal 3B thus enables a user to recognize the position where the first content 4 is to be displayed and the size of the first content 4 to be displayed before completing downloading the first content 4.

The terminal 3B displays the progress indicator 40 in each of the associated images 41A and 42A (S1 19). The terminal 3B enables the user to recognize that uploading of the first content 4 by the server 2 is in progress and downloading of the first content 4 by the terminal 3B is in progress.

In response to receiving the line drawing content 51, the line-drawing-associated information, the picture-associated information, and the video-associated information in S117b, the terminal 3B may display only the associated images 41A and 42A without the progress indicators 40. The terminal 3B may display the progress indicators 40 only until the terminal 3B completes downloading the first content 4 in S125b after receiving the completion notification in S121b.

The associated images 41A and 42A are represented by rectangular closed curves, but are not limited thereto, and may be represented by closed curves having other shapes. For example, the associated images 41A and 42A may be represented by closed curves having a circular shape, an elliptical shape, or a polygonal shape other than a rectangular shape. That is, the associated images 41A and 42A may be represented by closed curves having any shape as long as an area where the content C is to be displayed is clearly defined at a glance.

Although the terminal 3B displays the hourglasses as the progress indicators 40, the progress indicators 40 are not limited to the hourglasses and may display other known progress indicators. The terminal 3B may display, as the progress indicators 40, for example, progress bars, throbbers, splash screens, or spinning pinwheels.

Instead of displaying the progress indicators 40, the terminal 3B may display other information indicating that loading of the first content 4 is in progress. For example, the terminal 3B may display text such as "Loading of picture content 41/video content 42 is in progress" inside each of the associated images 41A and 42A instead of displaying the progress indicator 40.

The terminal 3B may receive, from the server 2, data indicating a progress status of uploading by the server 2 until the terminal 3B receives the completion notification in S121b after receiving the line drawing content 51, the line-drawing-associated information, the picture-associated information, and the video-associated information in S117b. The terminal 3B may display information indicating the progress status of uploading by the server 2 (e.g., text such as "Uploading is X% remaining.") inside each of the associated images 41A and 42A instead of displaying the progress indicator 40. Subsequent to receiving the completion notification in S121b, the terminal 3B may display information indicating the progress status of downloading from the server 2 (e.g., text such as "Downloading is X% remaining.") inside each of the associated images 41A and 42A instead of displaying the progress indicator 40.

### <First Embodiment (First Communication Sequence)>

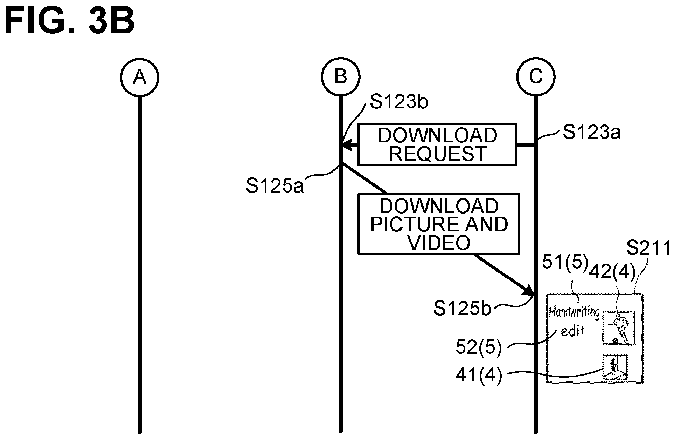

Referring to FIGS. 3A and 3B, a description will be provided on a first communication sequence according to a first embodiment. The first communication sequence is different from the first communication sequence in that an editing operation (a change operation and an input operation) is input to the terminal 3A prior to the terminal 3A completing the uploading of the picture content 41 and the video content 42.

Before the terminal 3A completes the uploading of the picture content 41 and the video content 42 that has started in S115a, the terminal 3A accepts a change operation of changing the position and size of the picture content 41 inserted in the notebook N of the terminal 3A in S101 (S201). In this case, the terminal 3A changes the position and size of the picture content 41 inserted in the notebook N of the terminal 3A in accordance with the change operation (S203). Further, before the terminal 3A completes the uploading of the picture content 41 and the video content 42 that has started in S115a, the terminal 3A accepts an input operation of inputting a line drawing content 52 as another second content 5 to the notebook N of the terminal 3A (S201). The input operation of inputting the line drawing content 52 includes specifying a specific position in the notebook N. The terminal 3A inserts and displays the line drawing content 52 at the specified position in the notebook N of the terminal 3A (S203).

The terminal 3A identifies the position and size of the line drawing content 52 input by the input operation. The terminal 3A transmits, to the server 2, the line drawing content 52 and line-drawing-associated information indicating the identified position and size of the line drawing content 52 (S205a). Further, the terminal 3A transmits, to the server 2, picture-associated information (hereinafter referred to as "editing-associated information") indicating the position and size of the picture content 41 that have been changed in accordance with the change operation (S205a).

The server 2 receives the line drawing content 52, the line-drawing-associated information, and the editing-associated information that have been transmitted from the terminal 3A (S205b). The server 2 transmits, to the terminal 3B, the line drawing content 52, the line-drawing-associated information, and the editing-associated information that have been received from the terminal 3A (S207a). The terminal 3B receives the line drawing content 52, the line-drawing-associated information, and the editing-associated information that have been transmitted from the server 2 (S207b).

The terminal 3B inserts the line drawing content 52 newly into the notebook N of the terminal 3B based on the position and size indicated by the received line-drawing-associated information, and displays the line drawing content 52 on the display unit 33 (S209). The terminal 3B changes the positions of the associated image 41A and the progress indicator 40 that correspond to the picture content 41, among the associated images 41A and 42A and the progress indicators 40 inserted in the notebook N of the terminal 3B, to the respective positions indicated by the editing-associated information (S209). Further, the terminal 3B changes the sizes of the associated image 41A and the progress indicator 40 whose positions have been changed to the respective sizes indicated by the editing-associated information (S209).

In response to completing downloading the picture content 41 and the video content 42 (S 125b), the terminal 3B deletes, from the notebook N of the terminal 3B, the progress indicators 40 that have been displayed since S209. Further, the terminal 3B inserts and displays the picture content 41 at the specified position in the notebook N in place of the associated image 41A whose position and size have been changed in S209 (S211). Furthermore, the terminal 3B inserts and displays the video content 42 at the specified position in the notebook N in place of the associated image 42A (S211). At this time, the terminal 3B adjusts the sizes of the picture content 41 and the video content 42 such that the picture content 41 and the video content 42 just fit within the associated images 41A and 42A, respectively.

The positions and sizes of the line drawing contents 51 and 52, the picture content 41, and the video content 42 inserted in the notebook N of the terminal 3B match the positions and sizes of the line drawing contents 51 and 52, the picture content 41, and the video content 42, respectively, inserted in the notebook N of the terminal 3A after the editing operation is performed.

<Actions, Effects, and Special Notes of First Embodiment> The terminal 3A can accept the editing operation regardless of whether or not the downloading of the first content 4 has completed (S201). Thus, the terminal 3A can share the content C (e.g., the line drawing content 52 or the picture content 41) edited in accordance with the editing operation with the terminal 3B in a timely manner.

The terminal 3A may accept the editing operation prior to starting the uploading of the first content 4 (prior to S115a). In this case, subsequent to transmitting the line drawing content 51, the line-drawing-associated information, the picture-associated information, and the video-associated information (S113a), the terminal 3A may transmit the line drawing content 52, the line-drawing-associated information, and the editing-associated information to the terminal 3B via the server 2.

The terminal 3A may accept the editing operation after the terminal 3A completes uploading the first content 4 and before the terminal 3B starts downloading the first content 4 (S115b to S125a).

The terminal 3A may accept the editing operation while the terminal 3B is downloading the first content 4 (S125a to S125b). In this case, the terminal 3A may transmit the line drawing content 52, the line-drawing-associated information, and the editing-associated information to the terminal 3B via the server 2 while the terminal 3B is downloading the first content 4.

### <Second Embodiment (Second Communication Sequence)>

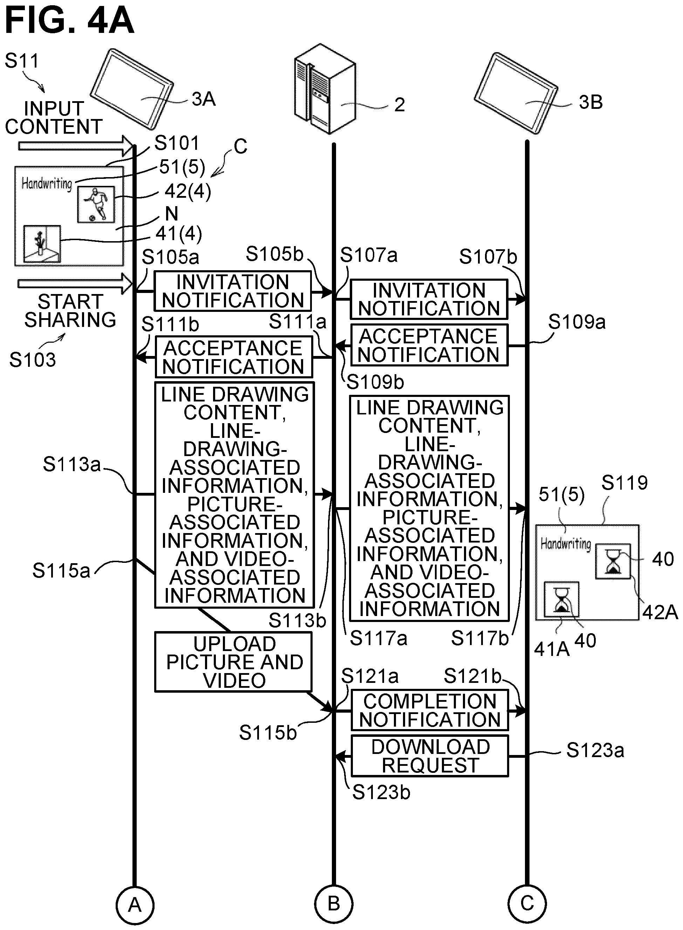

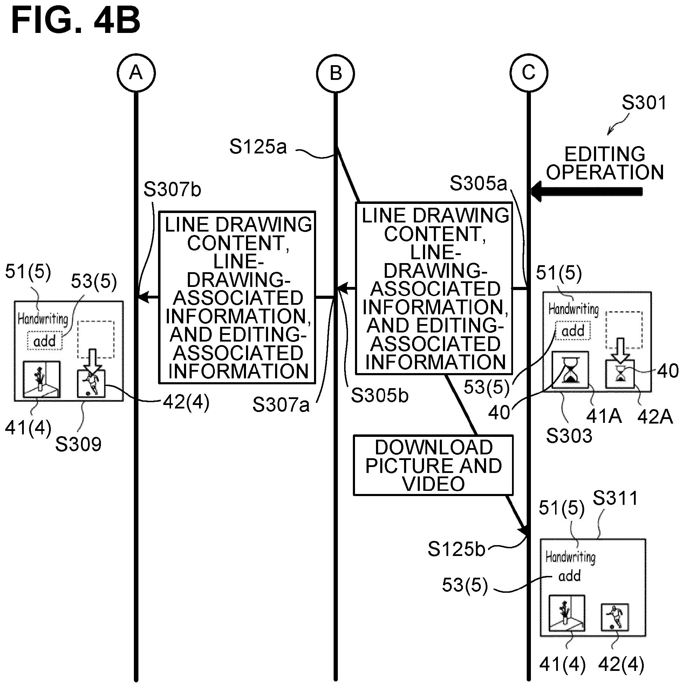

Referring to FIGS. 4A and 4B, a description will be provided on a second communication sequence according to a second embodiment. The second communication sequence is different from the first communication sequence in that an editing operation (a change operation and an input operation) is input to the terminal 3B prior to the terminal 3B completing the downloading of the picture content 41 and the video content 42.

The terminal 3B accepts a change operation of changing the position and size of the associated image 42A inserted in the notebook N in S119 (S301) after transmitting a download request to the server 2 (S123a) and before completing downloading the picture content 41 and the video content 42. In this case, the terminal 3B changes the position and size of the associated image 42A inserted in the notebook N of the terminal 3B in accordance with the change operation (S303). Further, the terminal 3B accepts an input operation of inputting a line drawing content 53 as another second content 5 to the notebook N of the terminal 3B (S301) after transmitting the download request to the server 2 (S123a) and before completing downloading the picture content 41 and the video content 42. The input operation of inputting the line drawing content 53 includes specifying a specific position in the notebook N. The terminal 3B inserts and displays the line drawing content 53 at the specified position in the notebook N of the terminal 3B (S303).

The terminal 3B identifies the position and size of the line drawing content 53 input by the input operation. The terminal 3B transmits, to the server 2, the line drawing content 53 and line-drawing-associated information indicating the identified position and size of the line drawing content 53 (S305a). Further, the terminal 3A transmits, to the server 2, editing-associated information indicating the position and size of the associated image 42A changed in accordance with the change operation (S305a).

The server 2 receives the line drawing content 53, the line-drawing-associated information, and the editing-associated information that have been transmitted from the terminal 3B (S305b). The server 2 transmits, to the terminal 3A, the line drawing content 53, the line-drawing-associated information, and the editing-associated information that have been received from the terminal 3A (S307a). The terminal 3A receives the line drawing content 53, the line-drawing-associated information, and the editing-associated information that have been transmitted from the server 2 (S307b).

The terminal 3A inserts the line drawing content 53 newly into the notebook N of the terminal 3A based on the position and size indicated by the received line-drawing-associated information, and displays the line drawing content 53 on the display unit 33 (S309). The terminal 3A changes the position of the video content 42 inserted in the notebook N to the position indicated by the editing-associated information (S309). Further, the terminal 3A changes the size of the video content 42 whose position has been changed to the size indicated by the editing-associated information (S309).

The positions and sizes of the line drawing contents 51 and 53, the picture content 41, and the video content 42 inserted in the notebook N of the terminal 3A match the positions and sizes of the line drawing contents 51 and 53, the picture content 41, and the video content 42, respectively, inserted in the notebook N of the terminal 3B after the editing operation is performed.

In response to completing downloading the picture content 41 and the video content 42 (S125b), the terminal 3B deletes, from the inside of each of the associated images 41A and 42A, the progress indicator 40 that has been displayed since S303, in the notebook N of the terminal 3B. Furthermore, the terminal 3B inserts and displays the picture content 41 at the specified position in the notebook N of the terminal 3B in place of the associated image 41A (S311). Further, the terminal 3B inserts and displays the video content 42 at the specified position in the notebook N of the terminal 3B in place of the associated image 42A whose position and size have been changed in S303 (S311). At this time, the terminal 3B adjusts the sizes of the picture content 41 and the video content 42 such that the picture content 41 and the video content 42 just fit within the associated images 41A and 42A, respectively.

### <Actions, Effects, and Special Notes of Second Embodiment>

The terminal 3B can accept the editing operation regardless of whether or not the downloading of the first content 4 has completed (S301). Thus, the terminal 3B can share the content C edited in accordance with the editing operation with the terminal 3A in a timely manner.

Note that the terminal 3B inserts the associated images 41A and 42A at the specified positions, respectively, in the notebook N of the terminal 3B and displays the associated images 41A and 42A (S119) until the terminal 3B completes downloading the first content 4 (S125b) after receiving the picture-associated information and the video-associated information (S 117b). In this case, for example, the downloaded first content 4 can be avoided from being inserted overlapping the second content 5 that has been inserted in the notebook N in accordance with the editing operation by the user. As described above, displaying the associated images 41A and 42A in a timely manner in the terminal 3B can avoid cancellation of the editing operation performed by the user.

The terminal 3B can accept the editing operation (S301) after receiving the picture-associated information and the video-associated information in S117b and before completing downloading the first content 4 in S125b. Thus, the terminal 3B can accept the editing operation even when uploading of the first content 4 by the server 2 is in progress or downloading of the first content 4 from the server 2 is in progress. In particular, the data volume of the second content 5 is less than the data volume of the first content 4. Thus, even in a case where the terminal 3B accepts the input operation of the second content 5, the terminal 3B can execute the processing in response to the input operation. The first content 4 is at least one of a picture, a video, or audio. The second content 5 is at least one of a text or a line drawing. Thus, during uploading and downloading of a picture, a video, and audio (a first content 4), the terminal 3B may accept an input operation of text and a line drawing (a second content 5) and execute processing in response to the input operation.

After completing receiving the picture-associated information and the video-associated information (S 117b) and before completing downloading the first content 4 (S 125b), the terminal 3B accepts a change operation (S301) and transmits the line drawing content 53, the line-drawing-associated information, and the editing-associated information to the server 2 (S305a) and the server 2 transmits the line drawing content 53, the line-drawing-associated information, and the editing-associated information to the terminal 3A (307a). Therefore, even when uploading of the first content 4 by the terminal 3A is in progress and downloading of the first content 4 by the terminal 3B is in progress, the terminal 3B may transmit the line drawing content 53, the line-drawing-associated information, and the editing-associated information to the terminal 3A in accordance with the accepted change operation.

The terminal 3A receives the line drawing content 53, the line-drawing-associated information, and the editing-associated information that have been transmitted from the terminal 3B (S307b). The terminal 3A inserts and displays the line drawing content 53 at the specified position in the notebook N of the terminal 3A based on the line drawing content 53 and the line-drawing-associated information received from the terminal 3B (S309). Further, the terminal 3A changes the position of the picture content 41 inserted in the notebook N of the terminal 3A based on the received editing-associated information (S309). As described above, even when loading of the first content 4 is in progress, the terminal 3A may newly display the second content 5 on the display unit 33 of the terminal 3A or change the position and size of the first content 4 displayed on the display unit 33 of the terminal 3A, in accordance with the editing operation accepted by the terminal 3B.

The terminal 3B may accept the editing operation after receiving the picture-associated information and the video-associated information in S 117b and before receiving the completion notification in S 121b. That is, the terminal 3B may accept the editing operation while the server 2 is uploading the first content 4. In this case, the terminal 3B may transmit the line drawing content 53, the line-drawing-associated information, and the editing-associated information to the terminal 3A via the server 2 while the server 2 is uploading the first content 4.

The terminal 3B may accept the editing operation after receiving the upload completion notification in S 121b and before starting downloading the first content 4 (S 121b to S125a).

The first content 4 is not limited to a picture, a video, and audio, and may be another type of content C. The second content 5 is not limited to text and a line drawing, and may be another type of content C. The data volume of the first content 4 may be equal to the data volume of the second content 5. The data volume of the second content 5 may be greater than the data volume of the first content 4.

The first content 4 may be input by the input operation in S301 instead of the second content 5. Specific examples of such a first content 4 include video taken by a camera of the terminal 3B. In this case, the terminal 3B may insert and display the first content 4 at a specified position in the notebook N of the terminal 3B in response to the input operation before completing downloading the first content 4 in S125b.

The terminal 3A changes the position of the video content 42 inserted in the notebook N of the terminal 3A to the position indicated by the editing-associated information in S309. In this case, for example, the terminal 3A may display a progress indicator instead of the video content 42 until the terminal 3A completes preparation for displaying the video content 42 on the notebook N of the terminal 3A.

### <Third Embodiment (Third Communication Sequence)>

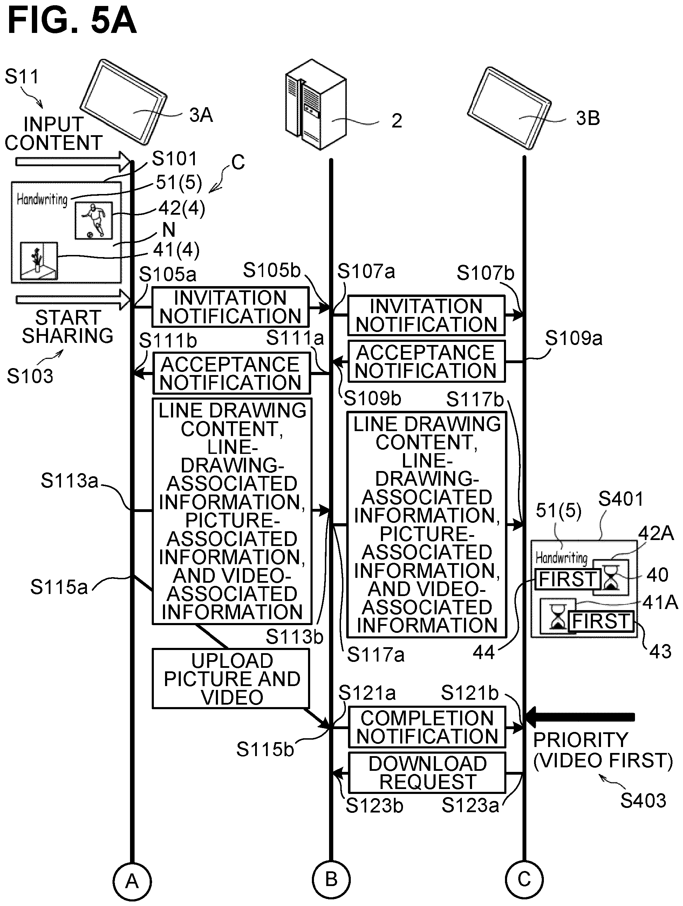

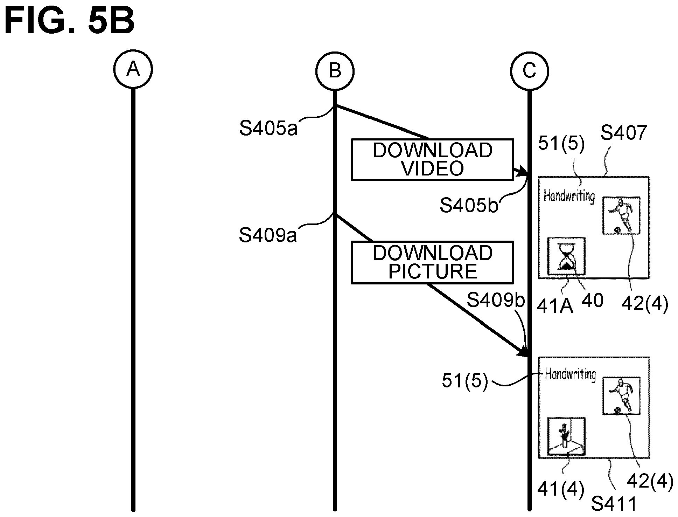

Referring to FIGS. 5A and 5B, a description will be provided on a third communication sequence according to a third embodiment. The third communication sequence is different from the first communication sequence in a procedure in which the terminal 3B downloads the picture content 41 and the video content 42 from the server 2. The other processing is the same as that in the first communication sequence.

The terminal 3B receives the line drawing content 51, the line-drawing-associated information, the picture-associated information, and the video-associated information that have been transmitted from the server 2 (S117b). The terminal 3B inserts the line drawing content 51 into the notebook N of the terminal 3B based on the position and size indicated by the line-drawing-associated information, and displays the line drawing content 51 on the display unit 33 (S401). The terminal 3B inserts the associated images 41A and 42A into the notebook N of the terminal 3B based on the position and size indicated by the picture-associated information and the video-associated information, and displays the associated images 41A and 42A on the display unit 33 of the terminal 3B (S401). The terminal 3B displays the progress indicator 40 in each of the associated images 41A and 42A (S401).

Further, the terminal 3B inserts and displays, at certain positions in the notebook N of the terminal 3B, assignment images 43 and 44 that enable assignment of priorities in downloading the picture content 41 and the video content 42 from the server 2 (S401). The assignment image 43 is a selection button displayed overlapping the associated image 41A, and may be selected to assign higher priority to the picture content 41 in downloading than the other. The assignment image 44 is a selection button displayed overlapping the associated image 42A, and may be selected to assign higher priority to the video content 42 in downloading than the other.

For example, the terminal 3B accepts an operation of selecting the assignment image 44 via the input unit 34 (S403). Based on the accepted operation, the terminal 3B identifies the video content 42 associated with the assignment image 44 as the first content 4 to be downloaded on a priority basis.

In response to receiving the completion notification from the server 2 (S121b), the terminal 3B transmits a download request to the server 2 (S123a). At this time, the terminal 3B includes, in the download request, priority information indicating that the first content 4 to be downloaded on a priority basis is the video content 42. The server 2 receives the download request (S123b).

The server 2 starts transmitting the video content 42 indicated by the priority information out of the picture content 41 and the video content 42 stored in the storage unit 22 (S405a). The terminal 3B starts downloading the video content 42 that the server 2 has started transmitting.

In response to completing downloading the video content 42 (S405b), the terminal 3B deletes, from the notebook N of the terminal 3B, the progress indicator 40 included in the associated image 42A that has been displayed since S401. The terminal 3B inserts and displays the received video content 42 in the notebook N of the terminal 3B in place of the associated image 42A (S407). Note that the associated image 41A and the progress indicator 40 included in the associated image 41A both displayed in S401 are continuously displayed in the notebook N of the terminal 3B.

After completing transmission of the video content 42, the server 2 starts transmitting the picture content 41 stored in the storage unit 22 (S409a). The terminal 3B starts downloading the picture content 41 that the server 2 has started transmitting.

In response to completing downloading the picture content 41 (S409b), the terminal 3B deletes, from the notebook N of the terminal 3B, the progress indicator 40 included in the associated image 41A that has been displayed since S401. The terminal 3B inserts and displays the received picture content 41 in the notebook N of the terminal 3B in place of the associated image 41A (S411).

### <Actions, Effects, and Special Notes of Third Embodiment>

The terminal 3B accepts the operation of specifying the first content 4 to be downloaded on a priority basis between the picture content 41 and the video content 42 (S403). The terminal 3B includes the priority information in the download request. The terminal 3B may thus download one having higher priority than the other between the picture content 41 and the video content 42, from the server 2 first.

For example, the user of the terminal 3B may perform an input operation of inputting a second content 5 by citing one of the picture content 41 and the video content 42 that are the first content 4 to be displayed in the notebook N of the terminal 3B. In this case, the one of the picture content 41 and the video content 42 to be cited is preferably downloaded and displayed in the notebook N of the terminal 3B prior to the other. With respect to this, the terminal 3B may download the one having higher priority than the other between the picture content 41 and the video content 42, from the server 2 first. Thus, the user may perform the input operation of inputting a second content 5 by citing the one downloaded prior to the other between the picture content 41 and the video content 42, in a timely manner.

The terminal 3B inserts and displays, at the certain positions in the notebook N of the terminal 3B, the assignment images 43 and 44 that enable assignment of priorities to the order in which the picture content 41 and the video content 42 are downloaded from the server 2 (S401). Thus, the terminal 3B enable the user to readily perform the operation of inputting the priorities.

Although the terminal 3B displays the assignment images 43 and 44 serving as selection buttons, the terminal 3B may display other assignment images through in which the priorities may be input in another manner. For example, the terminal 3B may display assignment images indicating drop-down lists in each of which one of numerals indicating priorities may be selected. The terminal 3B may download the first contents 4 in the order of the specified priorities. Alternatively, for example, the terminal 3B may display an assignment image indicating a selection box in which one of a plurality of rules (in order of data volume, picture first, or video first) defining priorities can be selected. The terminal 3B may download the first contents 4 in the order of priorities specified based on the selected rule.

In the communication sequence illustrated in FIG. 2, the terminal 3B may insert and display the assignment images 43 and 44 (refer to FIG. 5A) in the notebook N of the terminal 3B in S 119. Alternatively, the terminal 3B may accept, for example, an operation of selecting the assignment image 44 during downloading of the picture content 41 and the video content 42 from the server 2 (S125a to S125b). In this case, the terminal 3B may transmit, to the server 2, the priority information indicating that the first content 4 to be downloaded on a priority basis is the video content 42. In response to receiving the priority information, the server 2 may transmit the video content 42 to the terminal 3B first. That is, the terminal 3B may download the video content 42 prior to the picture content 41 from the middle of the downloading the picture content 41 and the video content 42.

### <Fourth Embodiment (Fourth Communication Sequence)>

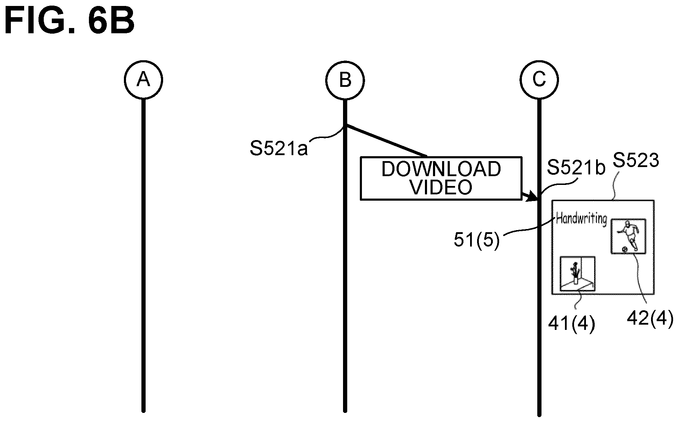

Referring to FIGS. 6A and 6B, a description will be provided on a fourth communication sequence according to a fourth embodiment. The fourth communication sequence is different from the first communication sequence in a procedure in which the terminal 3A uploads the picture content 41 and the video content 42 to the server 2. The other processing is the same as that in the first communication sequence.

In response to receiving the acceptance notification from the server 2 (S111b), the terminal 3A inserts and displays, at certain positions in the notebook N of the terminal 3A, assignment images 45 and 46 that enable assignment of priorities in uploading the picture content 41 and the video content 42 to the server 2 (S501). The assignment image 45 is a selection button displayed overlapping the picture content 41, and is to be selected to assign higher priority to the picture content 41 in uploading than the other. The assignment image 46 is a selection button displayed overlapping the video content 42, and is to be selected to assign higher priority to the video content 42 in uploading than the other.

For example, the terminal 3A accepts an operation of selecting the assignment image 45, via the input unit 34 (S503). Based on the accepted operation, the terminal 3A identifies the picture content 41 associated with the assignment image 45 as the first content 4 to be uploaded on a priority basis.

The terminal 3A transmits the line drawing content 51, the line-drawing-associated information, the picture-associated information, and the video-associated information to the server 2 (S113a). The server 2 receives the line drawing content 51, the line-drawing-associated information, the picture-associated information, and the video-associated information that have been transmitted from the terminal 3A (S113b). The server 2 transmits, to the terminal 3B, the line drawing content 51, the line-drawing-associated information, the picture-associated information, and the video-associated information that have been received from the terminal 3B (S117a). The terminal 3B receives the line drawing content 51, the line-drawing-associated information, the picture-associated information, and the video-associated information (S 117b).

The terminal 3B inserts the line drawing content 51, the associated image 41A, and the associated image 42A into the notebook N of the terminal 3B, and displays the line drawing content 51, the associated image 41A, and the associated image 42A on the display unit 33 (S119). The terminal 3B displays the progress indicator 40 in each of the associated images 41A and 42A (S119).

Next, the terminal 3A starts uploading the picture content 41 identified based on the operation accepted in S503 between the picture content 41 and the video content 42 that have been accepted in S11 (S505a). The server 2 receives the picture content 41 that the terminal 3A has started uploading, and stores the picture content 41 in the storage unit 22. In response to completing receiving the picture content 41 (S505b), the server 2 transmits a completion notification to the terminal 3B (S509a).

After completing uploading the picture content 41, the terminal 3A starts uploading the video content 42 (S507a). The server 2 receives the video content 42 that the terminal 3A has started uploading, and stores the video content 42 in the storage unit 22.

In response to receiving the completion notification transmitted from the server 2 (S509b), the terminal 3B transmits a download request to the server 2 for downloading the picture content 41 stored in the storage unit 22 of the server 2 (S511a). The server 2 receives the download request (S51 1b). The server 2 starts transmitting, to the terminal 3B, the picture content 41 stored in the storage unit 22 (S513a). The terminal 3B starts downloading the picture content 41 that the server 2 has started transmitting.

In response to completing downloading the picture content 41 (S513b), the terminal 3B deletes, from the notebook N of the terminal 3B, the progress indicator 40 included in the associated image 41A that has been displayed since S119. The terminal 3B inserts and displays the received picture content 41 in the notebook N of the terminal 3B in place of the associated image 41A (S515). Note that the associated image 42A and the progress indicator 40 included in the associated image 42A that have been displayed since S119 are continuously displayed in the notebook N of the terminal 3B.

In response to completing receiving the picture content 41 (S517b), the server 2 transmits a completion notification to the terminal 3B (S517a). In response to receiving the completion notification transmitted from the server 2 (S517b), the terminal 3B transmits a download request to the server 2 for downloading the video content 42 stored in the storage unit 22 of the server 2 (S519a). The server 2 receives the download request (S519b). The server 2 starts transmitting, to the terminal 3B, the video content 42 stored in the storage unit 22 (S521a). The terminal 3B starts downloading the video content 42 that the server 2 has started transmitting.

In response to completing downloading the video content 42 (S521b), the terminal 3B deletes, from the notebook N of the terminal 3B, the progress indicator 40 included in the associated image 42A that has been displayed since S119. The terminal 3B inserts and displays the received video content 42 in the notebook N of the terminal 3B in place of the associated image 42A (S523).

<Actions, Effects, and Special Notes of Fourth Embodiment> The terminal 3A accepts the operation of specifying the first content 4 to be uploaded on a priority basis between the picture content 41 and the video content 42 (S503). Thus, the terminal 3A can upload the one having higher priority than the other between the picture content 41 and the video content 42 first.

The terminal 3A inserts and displays, at the certain positions in the notebook N of the terminal 3A, the assignment images 45 and 46 that enable assignment of priorities to the order in which the picture content 41 and the video content 42 are uploaded to the server 2 (S501). Thus, the terminal 3A enable the user to readily perform the operation of inputting the priorities.

Note that modification examples of the assignment images 43 and 44 described in the third embodiment can be appropriately applied to the assignment images 45 and 46 in the fourth embodiment. For example, in the communication sequence illustrated in FIG. 2, the terminal 3A may insert and display the assignment images 45 and 46 (refer to FIG. 6A) at the certain positions in the notebook N of the terminal 3A in S101. Alternatively, the terminal 3A may accept, for example, an operation of selecting the assignment image 45 during uploading of the picture content 41 and the video content 42 to the server 2 (S115a to S115b). In this case, thereafter, the terminal 3A may upload the picture content 41 to the server 2 prior to the video content 42. That is, the terminal 3A may upload the picture content 41 prior to the video content 42 from the middle of the uploading the picture content 41 and the video content 42.

### <Other Modifications>

The present invention is not limited to the above-described embodiments, and various modifications can be available. The editing system 1 might not include the server 2. In this case, the same processing as that in the above-described embodiments may be executed by direct communication between the terminals 3 not via the server 2. The terminals 3 are not limited to tablet terminals and may be other electronic devices having a communication function.

In the above-described embodiments, it is assumed that the display units 33 of the terminals 3A to 3C have the same size. However, the display units 33 of the terminals 3A to 3C may have different sizes, respectively. In the above-described embodiments, the position and the size are standardized based on the size of each of the display units 33 in the left-right direction and the up-down direction. Thus, each of the terminals 3A to 3C can display the content C at a common position in the shared notebook N although the sizes of the display units 33 are different from each other.

In the above-described embodiments, the terminals 3A and 3B are enabled to accept an editing operation during uploading or downloading of the picture content 41 and the video content 42 as the first content 4. The first content 4 to be uploaded by the terminal 3A and to be downloaded by the terminal 3B are not limited to pictures or videos, and may be audio. The first content may include a line drawing having a large volume. That is, the terminals 3A and 3B may be enabled to accept an editing operation during loading of the large-volume content C.

In the above-described embodiments, the position and the size of the content C are indicated by respective values standardized based on the size of each of the display units 33, but are not limited thereto. For example, the position and the size of the content C may be indicated by values indicating actual lengths. The unit of the actual lengths may be, for example, mm or inch. Specifically, values of the X-axis coordinate indicating the position of the content C are values indicating a distance between the reference point (0,0) and the upper left corner of the content C in the left-right direction by actual lengths. Values of the Y-axis coordinate indicating the position of the content C are values indicating a distance between the reference point (0,0) and the upper left corner of the content C in the up-down direction by actual lengths. For example, a length in the left-right direction indicating the size of the content C is indicated by an actual length of the content C in the left-right direction. A length in the up-down direction indicating the size of the content C is indicated by an actual length of the content C in the up-down direction.

### <Others>

The CPU 31 that executes processing of S11 is an example of a "first accepting means" of the present invention. The CPU 31 that executes processing of each of S113a, S115a, S505a, and S507a is an example of a "first transmitting means" of the present invention. The CPU 31 that executes processing of each of S117b, S125b, S405b, S409b, S513b, and S521b is an example of a "first receiving means" of the present invention. The CPU 31 that executes processing of S119 is an example of a "first displaying means" of the present invention. The CPU 31 that executes processing of S301 is an example of a "second accepting means" according to a first aspect of the present invention. The CPU 31 that executes processing of S305a is an example of a "second transmitting means" of the present invention. The CPU 31 that executes processing of S101 is an example of a "second displaying means" according to the first aspect of the present invention. The CPU 31 that executes processing of S307b is an example of a "second receiving means" of the present invention. The CPU 31 that executes processing of S309 is an example of a "changing means" of the present invention. The CPU 31 that executes processing of S403 is an example of a "third accepting means" according to the first aspect of the present invention. The CPU 31 that executes processing of S401 is an example of a "third displaying means" of the present invention. Each of the assignment images 43 and 44 is an example of a first assignment image. The CPU 31 that executes processing of S201 is an example of a "second accepting means" according to a second aspect of the present invention. The CPU 31 that executes processing of S503 is an example of a "third accepting means" according to the second aspect of the present invention. The CPU 31 that executes processing of S501 is an example of a "second displaying means" according to the second aspect of the present invention. Each of the assignment images 45 and 46 is an example of a second assignment image.

The processing of S11 is an example of a "first accepting step" of the present invention. The processing of each of S113a, S115a, S505a, and S507a is an example of a "first transmitting step" of the present invention. The processing of each of S117b, S125b, S405b, S409b, S513b, and S521b is an example of a "first receiving step" of the present invention. The processing of S119 is an example of a "first displaying step" of the present invention. The processing of S201 is an example of a "second accepting step" according to a third aspect of the present invention. The processing of S301 is an example of a "second accepting step" according to a fourth aspect of the present invention.

### Reference Signs List

1: Editing system, 2: Server, 3, 3A, 3B, 3C: Terminal, 4: First content, 5: Second content, 40: Progress indicator, 41A, 42A: Associated image, 43, 44, 45, 46: Assignment image

## Claims

1. An editing system, comprising:
a first terminal and a second terminal communicable with each other,
the first terminal including:
a first accepting means for accepting a first content; and
a first transmitting means for transmitting first associated information and the first content accepted by the first accepting means to the second terminal, the first associated information indicating a first position and a first size, the first position indicating a position where the first content is to be displayed on a first display unit of the first terminal, the first size indicating a size of the first content to be displayed on the first display unit of the first terminal, and
the second terminal including:
a first receiving means for receiving the first content and the first associated information transmitted by the first terminal;
a first displaying means for, based on the first associated information received by the first receiving means, displaying, on a second display unit of the second terminal, an associated image based on which the first position and the first size are identifiable; and
a second accepting means for accepting an editing operation while the associated image is being displayed on the second display unit by the first displaying means, the editing operation including at least one of a change operation or an input operation, the change operation being of changing at least one of a position or a size of the associated image, the input operation being of inputting a second content different from the first content.

2. The editing system according to claim 1,
wherein the second terminal causes the second accepting means to accept the editing operation after the first receiving means completes receiving the first associated information and before the first receiving means completes receiving the first content.

3. The editing system according to claim 1 or 2,
wherein the first content has a data volume greater than a data volume of the second content.

4. The editing system according to claim 3,
wherein the first content is at least one of a picture, a video, or audio, and
wherein the second content is at least one of a text or a line drawing.

5. The editing system according to any one of claims 2 to 4,
wherein the second terminal causes the first displaying means to display a reception-in-progress image until the first receiving means completes receiving the first content after the first receiving means completes receiving the first associated information, the reception-in-progress image indicating that the reception of the first content is in progress.

6. The editing system according to claim 5,
wherein the reception-in-progress image is a progress indicator.

7. The editing system according to any one of claims 1 to 6,
wherein the second terminal causes the first displaying unit to display the associated image on the second display unit, the associated image being represented by a closed curve based on which the first position and the first size are identifiable.

8. The editing system according to any one of claims 1 to 7,
wherein the second terminal further includes a second transmitting means for, in response to the second accepting means accepting the editing operation after the first receiving means completes receiving the first associated information and before the first receiving means completes receiving the first content, transmitting, to the first terminal, second associated information indicating a second position and a second size, the second position indicating a position of the associated image whose position has been changed, the second size indicating a size of the associated image whose size has been changed.

9. The editing system according to claim 8,
wherein the first terminal further includes:
a second displaying means for displaying the first content accepted by the first accepting means in the first size at the first position on the first display unit;
a second receiving means to receive the second associated information transmitted by the second terminal; and
a changing means for, based on the second associated information transmitted by the second terminal, changing the position of the first content displayed on the first display unit from the first position to the second position and change the size of the first content from the first size to the second size.

10. The editing system according to any one of claims 1 to 9,
wherein the first content includes a plurality of sub contents,
wherein the second terminal further includes third accepting means for accepting assignment of priorities to the plurality of sub contents, and
wherein the second terminal causes the first receiving means to receive the plurality of sub contents in decreasing order of the priorities accepted by the third accepting means.

11. The editing system according to claim 10,
wherein the second terminal further includes a third displaying means for displaying, on the second display unit, a first assignment image that enables the assignment of the priorities to the plurality of sub contents, and
wherein the second terminal causes the third accepting means to accept the assignment of the priorities to the plurality of sub contents through the first assignment image.

12. The editing system according to any one of claims 1 to 11,
wherein the first position and the second size are indicated by respective values standardized based on a size of the first display unit.

13. The editing system according to claim 8 or 9,
wherein the second position and the second size are indicated by respective values standardized based on a size of the second display unit.

14. A terminal communicable with a particular terminal, the terminal comprising:
a first accepting means for accepting a first content;
a first transmitting means for transmitting first associated information and the first content accepted by the first accepting means to the particular terminal, the first associated information indicating a first position and a first size, the first position indicating a position where the first content is to be displayed on a display unit of the terminal, the first size indicating a size of the first content to be displayed on the display unit of the terminal;
a first displaying means for displaying the first content accepted by the first accepting means in the first size at the first position on the display unit of the terminal; and
a second accepting means for accepting an editing operation including at least one of a change operation or an input operation, the change operation being of changing at least one of a position or a size of the first content displayed on the display unit by the first displaying means, the input operation being of inputting a second content different from the first content.

15. The terminal according to claim 14,
wherein the first content includes a plurality of sub contents,
wherein the terminal further includes a third accepting means for accepting assignment of properties to the plurality of sub contents, and
wherein the first transmitting means transmits the plurality of sub contents to the particular terminal in decreasing order of the priorities accepted by the third accepting means.

16. The terminal according to claim 15, further including a second displaying means to display, on the display unit, a second assignment image that enables the assignment of the properties to the plurality of sub contents, and
wherein the third accepting means accepts the assignment of the priorities to the plurality of sub contents through the second assignment image.

17. A terminal communicable with a particular terminal, the terminal comprising:
a first receiving means for receiving a first content and first associated information transmitted by the particular terminal, the first associated information indicating a first position and a first size, the first position indicating a position where the first content is to be displayed on a display unit of the terminal, the first size indicating a size of the first content to be displayed on the display unit of the terminal;
a first displaying means for, based on the first associated information received by the first receiving means, displaying, on the display unit of the terminal, an associated image based on which the first position and the first size are identifiable; and
a second accepting means for accepting an editing operation while the associated image is being displayed on the display unit by the first displaying means, the editing operation including at least one of a change operation or an input operation, the change operation being of changing at least one of a position or a size of the associated image, the input operation being of inputting a second content different from the first content.

18. An editing program causing a computer of a first terminal communicable with a second terminal to execute steps, the steps including:
a first accepting step including accepting a first content;
a transmitting step including transmitting first associated information and the first content accepted in the first accepting step to the second terminal, the first associated information indicating a first position and a first size, the first position indicating a position where the first content is to be displayed on a display unit of the first terminal, the first size indicating a size of the first content to be displayed on the display unit of the first terminal;
a displaying step including displaying the first content accepted in the first accepting step in the first size at the first position on the display unit of the first terminal; and
a second accepting step including accepting an editing operation including at least one of a change operation or an input operation, the change operation being of changing at least one of a position or a size of the first content displayed on the first display unit in the displaying step, the input operation being of inputting a second content different from the first content.

19. An editing program causing a computer of a first terminal communicable with a second terminal to execute steps, the steps including:
a receiving step including receiving a first content and first associated information transmitted by the second terminal, the first associated information indicating a first position and a first size, the first position indicating a position where the first content is to be displayed on a display unit of the first terminal, the first size indicating a size of the first content to be displayed on the display unit of the first terminal;
a displaying step including, based on the first associated information received in the receiving step, displaying, on the display unit of the first terminal, an associated image based on which the first position and the first size are identifiable; and
an accepting step including accepting an editing operation while the associated image is being displayed on the display unit of the first terminal in the displaying step, the editing operation including at least one of a change operation or an input operation, the change operation being of changing at least one of a position or a size of the associated image, the input operation being of inputting a second content different from the first content.
